# EUROPEAN PATENT APPLICATION

(11) **EP 1 349 354 A1**
(43) Date of publication of application: **01.10.2003**
(21) Application number: 02445043.9
(22) Date of filing: 28.03.2002
(51) Int. Cl.: H04M 1/725, H04M 1/02

(54) **Detachable mobile terminal cover with integrated memory**

(71) Applicant: Sony Ericsson Mobile Communications AB, 221 88 Lund (SE)
(72) Inventor: Ogren, Per, 252 26 Helsingborg (SE)
(74) Representative: Akerman, Marten Lennart

(57) **Abstract**

A detachable cover (1) for a radio communication terminal (30), comprising securing means (2,36) for releasable attachment of the cover to the terminal, wherein said cover comprises data memory means (7) having a data output connector (8), devised to engage with a data input connector (38) of a terminal upon attachment. Hence, the invention provides releasable covers that may carry software. Preferably said data memory means carries communication terminal configuration data, such that the data stored in the memory means of the cover may be read and executed by the terminal to which the cover is attached. This way, not only an aesthetic effect is obtained but also a functional one.

## Description

### Field of the invention

The present invention relates generally to radio communication terminals having detachable covers, and to such detachable covers. In particular, the invention relates to releasably attachable covers devised to interact with the functions of a radio communication terminal.

### Background

The first commercially attractive cellular telephones or terminals were introduced in the market at the end of the 1980's. Since then, a lot of effort has been made in making smaller terminals, with much help from the miniaturisation of electronic components and the development of more efficient batteries. Today, numerous manufacturers offer pocket-sized terminals with a wide variety of capabilities and services, such as packet-oriented transmission and multiple radio band coverage.

In order to attract customers the terminal manufacturers have therefore taken further measures to strengthen their position in the competition, one such being to offer terminals with detachable covers. If a user wishes to change the outer appearance of his communication terminal, he can simply buy a new cover of the desired kind. The old cover is preferably released by a simple grip without the aid of tools, where after the new cover can be snapped on. A detachable cover is generally a fairly simple element, essentially formed from a single piece of plastic or possibly metal. The cover may represent only the front side of the terminal, i.e. the side of the terminal carrying the user interface generally comprising a terminal display and keypad, a microphone and a loudspeaker. In such a design, the cover forms a separate part of the housing of the terminal, or optionally an auxiliary part to be attached outside the housing. Alternatively, the cover may include more than one piece, e.g. a front piece and a back piece devised to substantially enclose the terminal. The detachable covers are often provided in different colours, and also with more advanced patterns such as logos or images.

The detachable covers of the prior art mainly create an aesthetic effect, changing the visual appearance of the terminal. They do not, however, have any effect on the functions of the terminal. Other solutions for creating this aesthetic effect, without having to change the cover, have also been proposed.

EP 1079584 by Laurikka et al discloses a cover for an electronic device, such as a communication terminal, whose colour can be changed by means of a control signal. That cover is advantageously produced by using a material, which changes its colour as a result of the effect of an electric or electromagnetic control signal. Such a material is for example electronic ink, with which a conventional cover is coated. The appearance of cover can hence be controlled by a signal from the communication terminal. When a call or a text message arrives in the communication terminal, it indicates this to the user by changing the colour of the cover.

Also EP 564127 by Blonder shows an apparatus housing capable of changing colour. The housing has a transparent outer layer, covering a layer of electrically switchable light modulating material. This invention too suggests indicating e.g. a telephone ring by changing the housing colour.

### Summary of the invention

Although the teachings of these pieces of prior art are useable for different types of signalling, they do not capable of affecting the functions of the terminal itself. The object of the present invention is therefore to provide an improved solution for changing the appearance and functions of a radio communication terminal.

According to a first aspect, this object is fulfilled by a detachable cover for a radio communication terminal, comprising securing means for releasable attachment of the cover to the terminal, wherein said cover comprises data memory means having a data output connector, devised to engage with a data input connector of a terminal upon attachment. Hence, the invention provides releasable covers that may carry software. Preferably said data memory means carries communication terminal configuration data, such that the data stored in the memory means of the cover may be read and executed by the terminal to which the cover is attached. This way, not only an aesthetic effect is obtained but also a functional one.

According to a second aspect, the object of the invention is fulfilled by a radio communication terminal having securing means for releasable attachment of a cover to a housing of the terminal, said terminal comprising a user input and output interface, and a computer system, wherein said terminal comprises a data input connector devised to engage with a data output connector of a cover according to the first aspect described above.

The detailed description shows specific features of various embodiments related to the aspects above.

### Brief description of the drawings

The features and advantages of the present invention will be more apparent from the following description of the preferred embodiments with reference to the accompanying drawings, on which
Fig. 1 schematically illustrates a communication terminal and a releasable terminal cover in accordance with an embodiment of the invention;
Fig. 2 the cover of Fig. 1 from the inner side thereof;
Fig. 3 schematically shows the cover and terminal when attached to each other; and
Fig. 4 illustrates an alternative embodiment of the invention.

### Detailed description of preferred embodiments

The present description relates to the field of appliances to radio communication terminals. The term radio terminal or communication terminal, also denoted terminal in short in this disclosure, includes all mobile equipment devised for radio communication with a radio station, which radio station also may be mobile terminal or e.g. a stationary base station. Consequently, the term radio terminal includes mobile telephones, pagers, communicators, electronic organisers, smartphones, PDA:s (Personal Digital Assistants) and DECT terminals (Digital Enhanced Cordless Telephony). Hence, although the structure and characteristics of the antenna design according to the invention is mainly described herein, by way of example, in the implementation in a mobile phone, this is not to be interpreted as excluding the implementation of the inventive antenna design in other types of radio terminals, such as those listed above. Furthermore, it should be emphasised that the term comprising or comprises, when used in this description and in the appended claims to indicate included features, elements or steps, is in no way to be interpreted as excluding the presence of other features elements or steps than those expressly stated.

Exemplary embodiments will now be described with references made to the accompanying drawings.

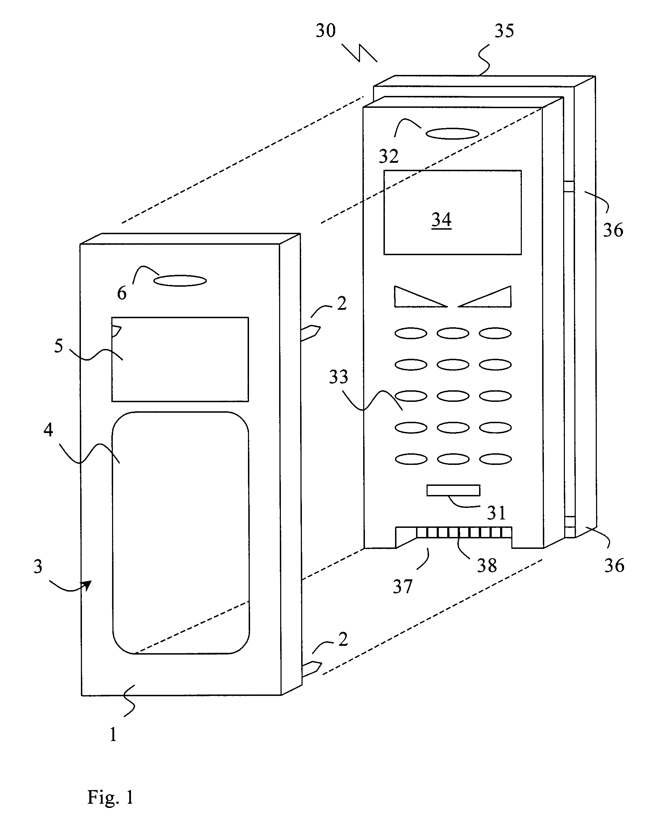

Fig 1 illustrates a radio-communication terminal 30, in the form of a cellular phone. Terminal 30 is carried in a housing or chassis 35, directly or indirectly supporting the other components of the terminal. Terminal 30 is devised with a user-input interface comprising a microphone 31 and a keypad 33. Furthermore, a user output interface of the terminal 30 comprises a loudspeaker 32 and a display 34. All of these features are well known in the prior art. Though not shown, the communication 30 further includes radio transmission and reception electronics, and a power supply in the form of a battery. Communication terminal 30 is also devised with a computer system, including a microprocessor with associated memory and software.

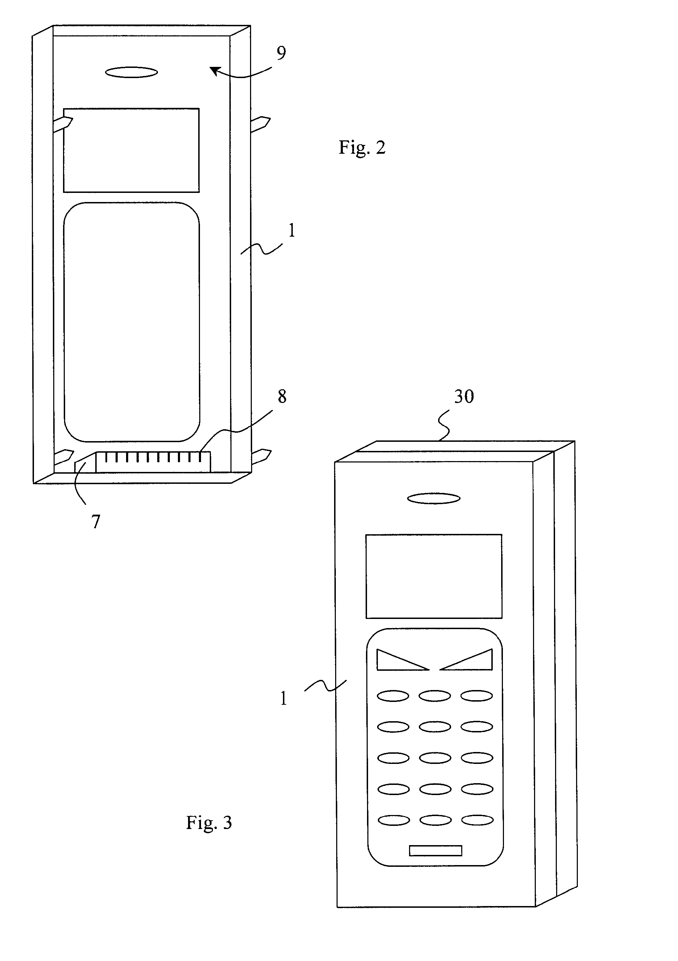

A releasable or detachable cover 1 is further illustrated, when disengaged from terminal 30. In the embodiment disclosed in Fig 1, cover 1 has an open recess 4 designed such that when cover 1 is attached to terminal 30, keypad 33 will be accessible for a user through recess 4. This is shown more clearly in Fig 3, illustrating terminal 30 and cover 1 when attached to each other. In the shown embodiment recess 4 is dimensioned such that it also embraces microphone 31. A second open recess 5 is formed in cover 1, dimensioned to enable a user to view display 34 of terminal 30. A third recess 6, which maybe an entire opening or a set of plural perforations or slots, is devised to fit with loudspeaker 32 of terminal 30.

Securing means are arranged for engaging cover 1 with terminal 30, comprising co-operating members 2 and 36, respectively. The securing means may be devised for engagement and disengagement by a simple manual operation, without the aid of any auxiliary tools, for instance by means of some sort of latch lock. Alternative embodiments may incorporate tool-requiring securing means, such as screws. The drawing simply indicates the presence of the securing means by a male member 2 devised to engage with a female member 36 of terminal 30 for releasable attachment. As the person skilled in the art would realise, there are numerous ways of achieving the attachments of the cover, the specific details thereof not being essential for the present invention. Furthermore, the skilled person would realise that engaging cover 1 to terminal 30 in the manner indicated by the dashed lines in the drawing is not the only possible solution. Cover 1 may also be arranged to slide into engagement with terminal 30 through a manoeuvre essentially in the longitudinal direction of cover 1 in relation to terminal 30. In the drawing, releasable cover 1 substantially covers the front side of terminal 30, such that side 3 of cover 1 forms the front side of the combined terminal and cover. The releasable cover may of course also include the backside portion of terminal 30. Furthermore, releasable cover 1 may occupy a portion smaller than that indicated in 1, for instance only the upper front side of terminal 30.

Further disclosed in Fig 1 is that terminal 30 comprises a data input connector interface 37 with an input connector comprising poles or leads 38. As shown in Fig 2, a data output connector with poles or leads 8 is arranged on the releasable cover 1. Fig 2 illustrates cover 1 as seen from the inner side 9, which in engagement with terminal 30 faces the front side of the terminal. In accordance with the invention, cover 1 comprises data memory means 7 linked to the output connector 8. The schematic illustrations of Fig 1 or 2 serve to illustrate that memory means 7 fits into the recessed portion of the data input connector interface 37 of terminal 30. The exact realisation of the inter-connection of data memory means 7 through its connector leads 8 with leads 38 of the data input connector interface 37 on the terminal might of course vary, as a skilled person would realise. The drawings illustrate a plurality of leads or poles 8 and 38, respectively. Dependent on the chosen data communication interface between the cover connector and terminal connector, the number or form of leads could also vary.

An advantage with having cover 1 carrying a built-in memory 7, is that the cover can carry software by means of which it is possible to change the behaviour or configuration of a communication terminal by switching covers. The releasable cover 1 may carry communication terminal configuration data, comprising computer program code, in memory means 7. The mechanical dimensions, and the securing means 2, 36, of cover 1 is preferably adapted to a certain type or types of communication terminal(s), and the configuration data is consequently adapted to said type or types of terminal(s). When cover 1 is attached to terminal 30, and contact is established between leads 8 and 38, the computer system in the terminal can access the computer program code in memory means 7. In the case of memory means 7 carrying configuration data, the computer system of terminal 30 is devised to execute the configuration data for reconfiguring one or more functions of terminal 30. The computer program code may for instance be adapted to configure the graphical user interface presentable on the terminal display 34. In one example, the reconfiguration of the graphical user interface is arranged for the purpose of adapting terminal 30 to a specific field of use. One example thereof, can be an "active lifestyle" adaptation. If cover 1 is made shock proof with rubbery surfaces, deformation zones, and a water resistance sealing to terminal 30, terminal 30 will be suitably adapted to outdoor use. Consequently, the software carried in memory means 7 of such a cover 1 may comprise computer program code devised to change the type or order of applications of terminal 30, since the applications you want to use when you are active outdoors may not be the same as when you are in an office. This adaptation need not be restricted to amending the application of the graphical interface. Additionally, or optionally, the reconfiguration based on the cover carried software changes the key or control functions of terminal 30. One example is to have shortcuts to the address memory reconfigured, such that predetermined communication addresses, or phone numbers, can be dialled by a simple pressing of one of the keys of key pad 33 and a dial up activation button. Such an embodiment could be advantageous for users who occasionally work or operate in a group of known people. When a user is to participate in such a group operation, he can attach a cover 1 suitably adapted therefore to his terminal 30, thereby rendering terminal 30 suitably adapted to communication with the other group members. Such type of occasional group operations could be strictly private, such as hunting or mountain climbing. However, the software carrying cover 1 can also be used to adapt a terminal 30 between private use and professional use, wherein the adaptation caused by the cover carried software can relate to the graphical user interface, the functions of the key pad, and/or the incoming call ring signal. Specific shortcuts for dialling can be associated with the "private" and "professional" covers 1, respectively, as above. Furthermore, for a private use cover, the ring signal received from addresses related to professional contacts may be given a certain character or melody, or they may simply be automatically turned off or blocked by terminal 30. If cover 1 is devised to adapt terminal 30 to outdoor use, the computer program code of memory means 7 may also be arranged to select a specific ring signal for terminal 30, or for instance an increased volume of the signal, such that it is easier for the user to perceive a signal.

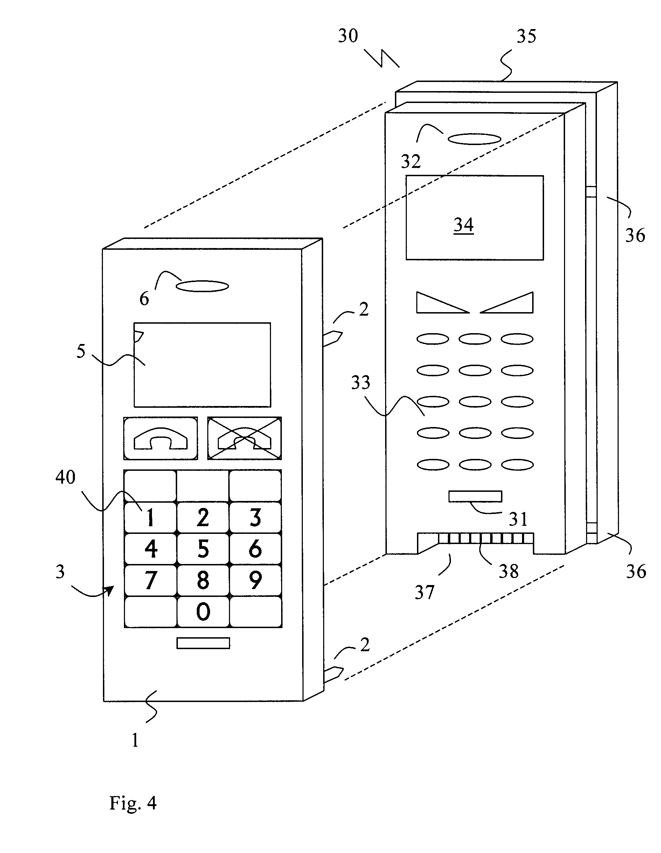

Fig 4 illustrates an embodiment of the present invention, wherein cover 1 is particularly adapted for ease of use. With the development of more advanced electronics and improved transmission capabilities of communication networks, an ever-increasing amount of application services can be accessed or used from the communication terminals. Furthermore, with the advances in antenna and battery performances as well as improved electronics and memory storage capabilities, the terminals still tend to become smaller. For accessing different services or applications, a series of instructions or key operations are often used, since the number of keys on the key pad 33 is generally limited. The keys or buttons on the keypad 33 are often quite small, and include both figure and letter indications relating to the use of the particular key, and those figures and letters are consequently quite small. Many people find portable communication terminals useable, but are only interested in using them for ordinary telephony services, i.e. speech calls. Cover 1 of Fig 4 illustrates a cover suitably adapted for ease of use. In stead of a recessed portion 4 cover 1 includes a keypad interface 40, devised to connect with buttons or connectors on keypad 33 of terminal 30 upon attachment of cover 1. In this case, however, the keys of interface 40 are enlarged to the extent possible. In Fig 4 this means that the keys of interface 40 even cover the intermediate spaces between the buttons or connectors of keypad 33. The keys of interface 40 hence provide a larger depressable surface of each key, on which there is also room for a larger indication of the key figure, as illustrated in Fig 4. The triggering button or buttons, at the top of interface 40, are preferably also enlarged and devised with a simplified indication for ease of use. An embodiment according to Fig 4 is particularly advantageous for users having poor eyesight, and for people who are not interested in auxiliary services, such as SMS (Short Message Services) or WAP (Wireless Application Protocol). In this embodiment, memory means 7 of cover 1 preferably also includes configuration data devised to adapt the functions of terminal 30 for ease of use. Such adaptation may include a simplification of the presentation on the graphical user interface on display 34, for example using larger letters and figures. The configuration data of memory means 7 of this embodiment may also be devised to configure terminal 30 to use a predetermined signal for indicating an incoming call, preferably having an increased sound volume.

The computer program code carried in memory means 7 of the detachable cover 1, may also be devised to correlate with a specific visual appearance of cover 1. This way, when the computer system of terminal 30 executes the computer program code of an attached cover 1, terminal 30 is devised to reconfigure one or more functions of the terminal to relate to said visual appearance. In one embodiment, the output interfaces of terminal 30 are adapted, by means of software carried in its memory means 7, to match the visual appearance of cover 1. The cover can for instance be designed with movie or cartoon characters on it, wherein the software of memory means 7 is devised to adapt the graphical user interface to a form and colour which is normally associated with those characters presented on the cover. Furthermore, the ring signal of terminal 30 could be adapted to a theme song related to the character or characters presented on the cover.

In one embodiment, cover 1 may carry a computer game in memory means 7. When the cover is attached and the computer system in the terminal communicates with memory means 7, access to the computer game is automatically made possible through a game menu of the terminal, presentable on display 34. Also in this case, the visual appearance of the cover carrying a computer game may be related to the characters of that game.

In one embodiment, the workspace of memory means 7 may also be used by the computer system of terminal 30 to store information. This way, memory means 7 will function to expand the accessible memory storage space for the terminal computer system. Memory means 7 can, in such an application, for instance be used for storing address files or previous received or transmitted messages. It can also be used to temporarily store large media files, such as video, which require a lot of memory space. In one embodiment, memory means 7 further comprises a computer processor, devised to operate with the computer system of an attached terminal 30. Such an embodiment may provide increased processing capabilities to terminal 30, and may add functions, such as image processing, that the terminal normally is not capable of handling. Furthermore, memory means 7 may comprise a media player or recorder, such as an MP3 player. When a cover 1 comprising such a media player in memory means 7 is attached to a terminal 30, the media player is preferably controllable from the normal keys of keypad 33 on the terminal, through interaction over leads 8, 38.

The principles of the present invention have been described in the foregoing by examples of embodiments or modes of operations. However, the invention should not be construed as being limited to the particular embodiments discussed above. A skilled person would realise that the accommodation of a data memory on a releasable cover for communication terminals particularly portable terminals, gives rise to many further advantages or possibilities than those listed in the instant specification. Thus, the above described embodiment should be regarded as illustrative rather than restrictive, and it should be appreciated that variations may be made in those embodiments by persons skilled in the art, without departing from the scope of the present invention as defined by the appended claims.

## Claims

1. Detachable cover (1) for a radio communication terminal (30), comprising securing means (2,36) for releasable attachment of the cover to the terminal, **characterised in that** said cover comprises data memory means (7) having a data output connector (8), devised to engage with a data input connector (38) of a terminal upon attachment.

2. The detachable cover as recited in claim 1, **characterised in that** said data memory means carries communication terminal configuration data.

3. The detachable cover as recited in claim 2, **characterised in that** said configuration data comprises computer program code, which when executed by a computer system in an attached terminal is devised to re-configure one or more functions of said terminal.

4. The detachable cover as recited in claim 2, **characterised in that** said configuration data comprises computer program code devised to configure a graphical user interface on a display (34) of an attached communication terminal.

5. The detachable cover as recited in claim 2, **characterised in that** said cover has a mechanical structure designed to adapt an attached communication terminal to a certain field of use, wherein said configuration data is devised to re-configure one or more functions of said terminal for said field of use.

6. The detachable cover as recited in claim 2, **characterised in that** said cover is devised to adapt an attached terminal for simplified operation, wherein said configuration data is devised to configure the terminal to present enlarged symbols on said display.

7. The detachable cover as recited in claim 6, **characterised in that** said cover comprises a key pad (40) with enlarged keys, communicatively connectable to a user input interface (33) of an attached terminal.

8. The detachable cover as recited in claim 2 or 6, **characterised in that** said configuration data is devised to configure the terminal to use a predetermined signal when indicating an incoming call.

9. The detachable cover as recited in any of the previous claims, **characterised in that** said cover has a specific visual appearance, wherein said memory means carries computer program code, which when executed by a computer system in an attached terminal is devised to re-configure one or more functions of said terminal to relate to said visual appearance.

10. The detachable cover as recited in claim 1, **characterised in that** said data memory means comprises a computer processor devised to operate with a computer system of an attached terminal.

11. The detachable cover as recited in claim 1, **characterised in that** said data memory means comprises a media player or recorder, operable from an attached terminal.

12. The detachable cover as recited in claim 1, **characterised in that** said memory means carries a computer game, which can be executed by a computer system of an attached terminal.

13. A radio communication terminal (30) having securing means (36) for releasable attachment of a cover (1) to a housing (35) of the terminal, said terminal comprising a user input (31,33) and output (32,34) interface, and a computer system, **characterised in that** said terminal comprises a data input connector (38) devised to engage with a data output connector (8) of a cover according to any of the previous claims, upon attachment thereof to the terminal.

14. The radio communication terminal as recited in claim 14, **characterised in that** said computer system comprises means for reading data from memory means connected to said data input connector, and means for re-configuring one or more functions of the terminal dependent on such read data.

15. The radio communication terminal as recited in claim 14, **characterised in that** said computer system includes a data memory, and is devised to use memory means carried in an attached cover to expand the accessible memory storage space for said computer system.
